# EUROPEAN PATENT APPLICATION

(11) **EP 1 879 364 A1**
(43) Date of publication of application: **16.01.2008**
(21) Application number: 06117026.2
(22) Date of filing: 12.07.2006
(51) Int. Cl.: H04M 1/10, H01H 36/00, H04M 1/725, H04M 1/04, A45F 5/02

(54) **Holster for an electronic hand held device**

(71) Applicant: Research In Motion Limited, Waterloo, Ontario N2L 3W8 (CA)
(72) Inventor: Lee, Matthew R., Belleville Ontario K8N 4Z6 (CA); Mak-Fan, David J., Waterloo Ontario N2K 4B1 (CA); Lynch, Daniel G., Waterloo Ontario N2L 3X1 (CA)
(74) Representative: Rickard, David John

(57) **Abstract**

The holster (1) has one or more magnets (4, 4', 4") positioned so that a Hall effect sensor (3) in the handheld device (2) detects a magnet both when partially inserted in the holster and when fully holstered, thereby enabling desired elements of the device to be disabled from the beginning of the holstering process, to avoid accidental keystrokes or triggering of other input elements such as a trackball. The holster may have separate magnets (4, 4') to accomplish this, or an elongated single magnet (4"). The holster may have a fold-over closure flap (10) with a metallic element (11) aligning with the magnet to also secure the flap.

## Description

This invention relates to portable handheld electronic devices, especially but not limited to portable handheld wireless communication devices, and more particularly to holsters for same in combination with the devices.

With such devices, it is common and convenient to provide a holster to protect and conveniently transport the device when it is not in use. The holster may have a belt clip to attach it to a user's belt, or may have other attachment means for attachment to a purse or knapsack, or may simply be nothing more than a protective cover allowing the user to store the device in a pocket, briefcase or wherever else desired. However, the devices typically have keyboards, trackballs, touch pads, switches or other such elements, and it is desirable to be able to place the device in the holster without having to turn it off to avoid triggering of these elements when contacted by the holster. It is known to have a magnet in the holster, with a Hall effect sensor in the device, so that either the device is turned off in response to the device being placed in the holster and the sensor aligning with the magnet, or at least certain functions are disabled. For example, it is common to disable the keyboard, trackball or other input means, and to turn off any display.

However, a problem which sometimes arises is that the device may not be disabled or turned off until it is fully seated in the holster, since the sensor may not come into proximity to the magnet until then. This can result in unintended keystrokes, trackball movement or other triggers, which are clearly undesirable, while the user is placing the device in the holster without any other desired activity. It would therefore be desirable to have a way of disabling or turning off the device as soon as its insertion into the holster begins, rather than when it is fully seated. However, the device must then remain disabled once fully seated. Another problem is that the device may not consider itself to be holstered if it is not fully seated in the holster, with the magnet aligned with the Hall effect sensor. The device may misbehave from a user's viewpoint, for example by failing to vibrate in response to an incoming call or message, though set to vibrate when in the holster; or failing to lock, consuming excessive power via the LCD, trackball or other device feature. It would be preferable for the device to behave as if holstered, from the beginning of the holstering process, whether or not that process is properly completed, until the device is removed from the holster.

The same problem can arise, especially in leather or other soft-material holsters, when the device is properly seated initially, but comes loose and rides up in the holster so that the magnet in the holster no longer aligns with the sensor in the device.

For convenience, the term "disabled" will be used throughout this specification. It should be clearly understood that that is intended to mean disabling specific functions of the device, but also to include possibly turning the device off.

It should be understood that the word "holster", as used throughout this specification, means any holder adapted to accommodate the device, whether or not it is of the belt-mountable type most commonly referred to as a holster.

In view of the preceding, preferably the invention provides improved means for sensing when a handheld electronic device is about to be holstered, or is in the process of being holstered, and to then immediately treat the device as if holstered.

According to one aspect of the invention, a holster for a handheld electronic device preferably has a Hall effect sensor and is programmed to disable at least some functions of the device when the sensor detects a magnet associated with the holster, thereby indicating that the device is holstered. The holster has magnet means positioned such that the sensor aligns with the magnet means both when partially inserted in the holster and when fully holstered. The magnet means may be mounted within the holster or mounted on external surfaces of the holster. According to another aspect of the invention, the magnet means preferably includes at least two separate magnets, including a first magnet positioned to align with the sensor when the device is fully holstered, and a second magnet positioned to align with the sensor when the device is only partially inserted in the holster.

According to another aspect of the invention, the device is preferably programmed so that once at least some functions are disabled by the sensor approaching the second magnet, it remains disabled for a small amount of time to permit the sensor to approach the first magnet during holstering without the functions becoming again enabled.

According to another aspect of the invention, the magnet means preferably comprises a single strip magnet extending longitudinally of the holster, so as to align with the sensor continuously from a position when the device is partially inserted in the holster, to a position where the device is fully holstered.

Further aspects of the invention will be described or will become apparent in the course of the following detailed description and drawings of examples of the invention.

### BRIEF DESCRIPTION OF THE DRAWINGS

Exemplary embodiments of the invention will now be described, with reference to the attached drawings, in which:
Fig. 1 is an exploded perspective view of a handheld electronic device and a holster therefor, according to one aspect of the invention;

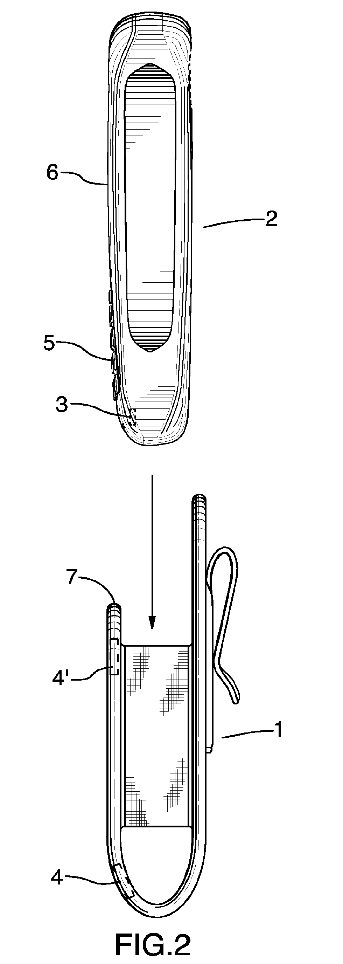

Fig. 2 is an exploded side view corresponding to Fig. 1;
Fig. 3 is an exploded perspective view of another exemplary embodiment; and
Fig. 4 is a perspective view of an exemplary embodiment in which the holster has a fold-over closure flap.

### DESCRIPTION OF PREFERRED EMBODIMENTS

In the following description, various exemplary embodiments of the invention will be described. For purposes of explanation, specific configurations and details are set forth in order to provide a thorough understanding of the embodiments. However, it should be apparent to those knowledgeable in the field of the invention that the invention may be practiced without the specific details. The description may also omit or simplify well-known features in order not to obscure the embodiment being described.

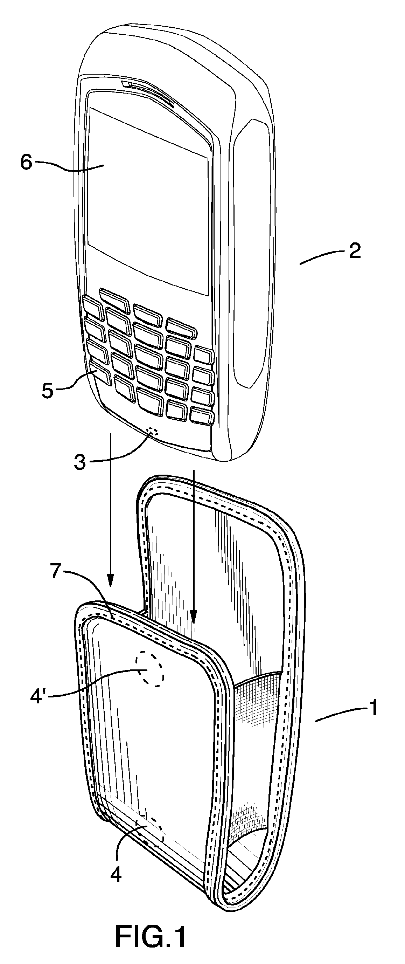

Fig. 1 shows a holster 1 for an electronic device 2, according to one aspect of the invention. The device has a Hall effect sensor 3 embodied therein and the holster has a first magnet 4 positioned to align with the sensor when the device is fully holstered. The device is programmed so that when the Hall effect sensor detects the magnet, the device is disabled, or at least certain elements thereof are disabled, for example the keyboard 5 and display 6, and other elements as applicable, for example a trackball (not shown).

In this first exemplary embodiment, the holster 1 has a second magnet 4', located near an upper edge 7 of the holster. Thus when the device is inserted into the holster, the sensor 3 immediately detects the second magnet 4' and the device is disabled. When the device is fully holstered, the sensor detects the first magnet 4 and remains disabled.

Preferably the sensor 3 is located near the bottom of the device, i.e. near the first part of the device to be inserted in the holster, and preferably well below the keyboard or trackball or other input means, so that the device is disabled before any accidental inputs from contact with the holster.

Of course, it would not be desirable for the device to become fully functional again once the sensor 3 has passed the second magnet 4' and before it aligns with the first magnet 4. Therefore, the device preferably is programmed so that once disabled by the second magnet, it remains disabled for a small amount of time, but sufficient for the sensor to reach the first magnet even during a somewhat slower than typical holstering. For example, it could remain disabled for 1 or 2 seconds, by which time the sensor would normally align with the first magnet, so that the device would remain enabled.

It will be understood that the first magnet 4 and the second magnet 4' could be mounted on an external surface or surfaces of the holster.

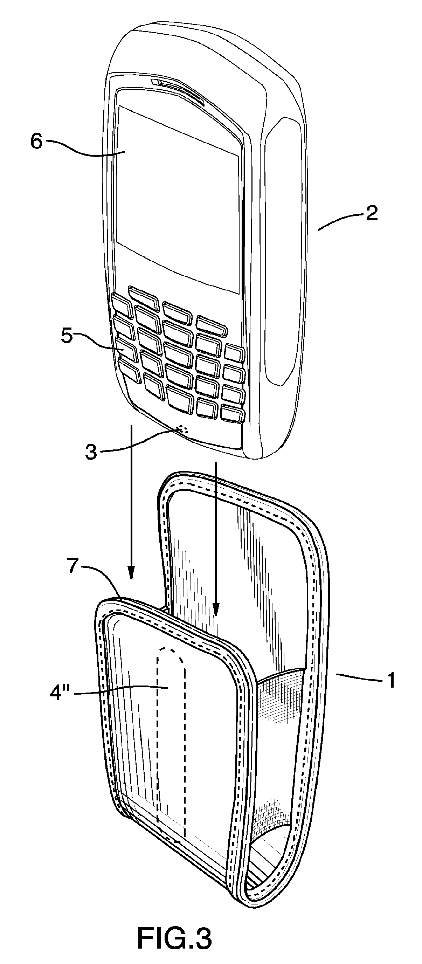

Fig. 3 shows an alternative embodiment, in which a single strip magnet 4" is installed in the holster, so that the Hall effect sensor 3 aligns with an upper area of the magnet 4" when first inserted in the holster, and with a lower area of the magnet when fully holstered. In this embodiment, of course there is no need to program the device to account for a time gap between leaving a second magnet and reaching a first magnet, since the magnet is continuous and the device accordingly will remain disabled. The magnet is configured to align with the path followed by the sensor as the device is inserted in the holster.

It will be understood that the strip magnet 4" and the second magnet 4' could be mounted on an external surface of the holster.

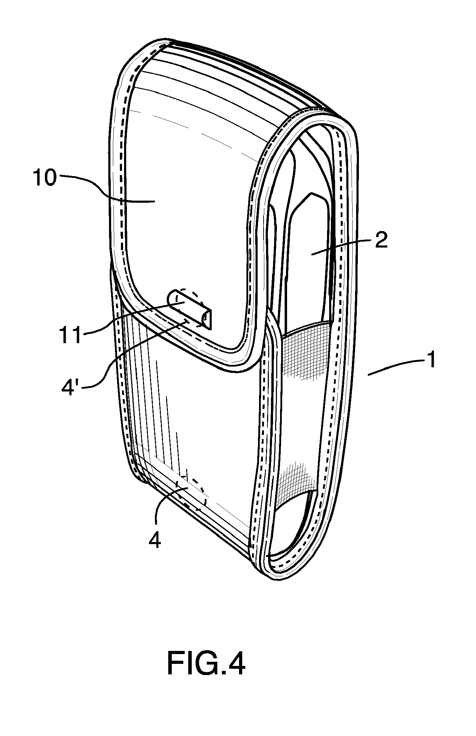

Fig. 4 shows a further feature, which could be applicable to both examples described above, as well as to others, where the holster 1 has a fold-over flap 10, with a metal element 11 on the outside, inside or both, engaging the magnet 4' (or 4" in a Fig. 3-type example), to hold the flap closed.

Preferred and exemplary embodiments of this invention are described herein. Variations of those embodiments may become apparent to those of ordinary skill in the art upon reading the foregoing description. It is expected that skilled persons will employ such variations as appropriate, and it is expected that the invention may be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

Without limiting the generality of the foregoing statement, some specific examples of possible variations may include the following, though others may be apparent to those knowledgeable in the field of the invention.

In the above exemplary embodiments, the magnets are shown in a front panel of the holster. However, depending on the configuration of the holder and the location of the sensor in the device, the magnets could be located in a rear panel of the holster, or in either side panel. In another alternate embodiment, for example, the magnet may be located on the border or trim of the holster so that when the device is near the holster, it will be disabled upon contact or close proximity to the holster.

Further variations may be apparent or become apparent to those knowledgeable in the field of the invention, and are within the scope of the invention as defined by the claims which follow.

## Claims

1. A holster (1) for a handheld electronic device (2), wherein the device has a Hall effect sensor (3) and is programmed to disable at least some functions of the device when the sensor detects a magnet in the holster, thereby indicating that the device is holstered, **characterized by** the holster having magnet means (4, 4', 4") positioned such that said sensor aligns with said magnet means both when partially inserted in said holster and when fully holstered.

2. A holster as in claim 1, wherein said magnet means comprises at least two separate magnets (4, 4'), comprising a first magnet (4) positioned to align with said sensor when said device is fully holstered, and a second magnet (4') positioned to align with said sensor when said device is only partially inserted in said holster.

3. A holster as in claim 2, wherein said device is programmed so that once at least some functions are disabled by said sensor approaching said second magnet (4'), it remains disabled for a small amount of time to permit the sensor to approach the first magnet (4) during holstering without said functions becoming again enabled.

4. A holster as in claim 1, wherein said magnet means comprises a single strip magnet (4") extending longitudinally of said holster, so as to align with said sensor continuously from a position when said device is partially inserted in said holster, to a position where said device is fully holstered.

5. A holster as in any one of claims 1 to 4, further comprising a flap (10) extending from a back portion thereof, over to a front portion thereof, said flap having metallic means (11) positioned to align with said magnet means (4', 4") so as to secure said flap.

6. A holster as in any one of claims 1 to 5, in combination with a said handheld electronic device (2).

7. A holster and handheld electronic device as in claim 6, wherein said sensor (3) is positioned close to a lower edge of said device relative to an insertion direction of said device in said holster.

## Amended claims

### Amended claims in accordance with Rule 137(2) EPC.

**1.** A holster (1) for a handheld electronic device (2), wherein the device has a Hall effect sensor (3) and is programmed to disable at least some functions of the device when the sensor detects a magnet in the holster, thereby indicating that the device is holstered, **characterized by** the holster having magnet means (4, 4', 4") located near an upper edge of the holster and at the bottom of the holster and aligned with the path of insertion of the device into the holster.

**2.** A holster as in claim 1, wherein said magnet means comprises at least two separate magnets (4, 4'), comprising a first magnet (4) located near an upper edge of the holster and a second magnet (4') positioned at the bottom of the holster.

**3.** A holster as in claim 1, wherein said magnet means comprises a single strip magnet (4") extending longitudinally of said holster.

**4.** A holster as in any one of claims 1 to 3, further comprising a flap (10) extending from a back portion thereof, over to a front portion thereof, said flap having metallic means (11) positioned to align with said magnet means (4', 4") so as to secure said flap.

**5.** A handheld electronic device (2) having a Hall effect sensor (3) and being programmed to disable at least some functions of the device when the sensor detects a magnet in the holster, thereby indicating that the device is holstered, **characterized by** the holster having magnet means (4, 4', 4") positioned such that said sensor aligns with said magnet means both when partially inserted in said holster and when fully holstered.

**6.** A device as in claim 5, wherein said magnet means comprises at least two separate magnets (4, 4'), comprising a first magnet (4) positioned to align with said sensor when said device is fully holstered, and a second magnet (4') positioned to align with said sensor when said device is only partially inserted in said holster.

**7.** A device as in claim 6 programmed so that once at least some functions are disabled by said sensor approaching said second magnet (4'), they remain disabled for a small amount of time to permit the sensor to approach the first magnet (4) during holstering without said functions becoming again enabled.

**8.** A device as in claim 5, wherein said magnet means comprises a single strip magnet (4") extending longitudinally of said holster, so as to align with said sensor continuously from a position when said device is partially inserted in said holster, to a position where said device is fully holstered.

**9.** A device as in any one of claims 5 to 8, further comprising a flap (10) extending from a back portion of the holster, over to a front portion thereof, said flap having metallic means (11) positioned to align with said magnet means (4', 4") so as to secure said flap.

**10.** A device as in any preceding claim , wherein said sensor (3) is positioned close to a lower edge of said device relative to an insertion direction of said device in said holster.
